# EUROPEAN PATENT APPLICATION

(11) **EP 3 506 320 A1**
(43) Date of publication of application: **03.07.2019**
(21) Application number: 17846967.2
(22) Date of filing: 29.08.2017
(51) Int. Cl.: G21D 3/00, G21C 17/00

(54) **METHOD FOR ENABLING LARGE INTEGRATED MONITORING SCREEN FOR INTEGRATED MONITORING OF MULTIPLE REACTORS AND SYSTEM FOR SAME**

(30) Priority: 29.08.2016 KR 20160110310
(71) Applicant: Korea Hydro & Nuclear Power Co., Ltd, Gyeongju-si, Gyeongsangbuk-do 38120 (KR)
(72) Inventor: KIM, Dae Woong, Sejong 30130 (KR); CHOI, Nam Woo, Seongnam-si Gyeonggi-do 13612 (KR); KIM, Bum Nyun, Gyeongju-si Gyeongsangbuk-do 38097 (KR); KIM, Yang Seok, Daejeon 34053 (KR); RYU, JiSoo, Gyeongju-si Gyeongsangbuk-do 38130 (KR); KIM, Jung Hoon, Gyeongju-si Gyeongsangbuk-do 38081 (KR); OH, Jeong Hag, Ulsan 44743 (KR); KIM, Ji In, Seoul 05069 (KR); PARK, Young Sheop, Sejong 30064 (KR); PARK, Chi Yong, Daejeon 35217 (KR); KIM, Hyoung Kyun, Daejeon 34101 (KR); LEE, Byoung Oh, Daejeon 34075 (KR); KIM, Jong Seog, Daejeon 34023 (KR)
(74) Representative: Habermann, Hruschka & Schnabel
(86) International application number: PCT/KR2017/009431
(87) International publication number: WO 2018/044042

(57) **Abstract**

The present invention provides a method for enabling a large integrated monitoring screen for integrated monitoring of multiple reactors, and a large integrated monitoring screen system. The method for enabling the large integrated monitoring screen comprises the steps of: a screen generation managing device in a remote integrated monitoring center generating at least one of a status monitoring screen, an early warning screen, a diagnostic analysis screen, and a CCTV screen with respect to a plurality of reactors in a nuclear power plant; and transmitting a screen requested by an administrator to the large integrated monitoring screen through an integrated screen control device.

## Description

### [Technical Field]

The present invention relates to an implementation of a large integrated monitoring screen and, more particularly, to an implementation of large integrated monitoring screen for integrally monitoring a nuclear power plant.

### [Background Art]

In order to monitor a power plant driving condition, conventionally, power plant main systems and machines are displayed in a Main Control Room, and the power plant main systems and machines are monitored using simple sate monitoring screen for monitoring operation conditions.

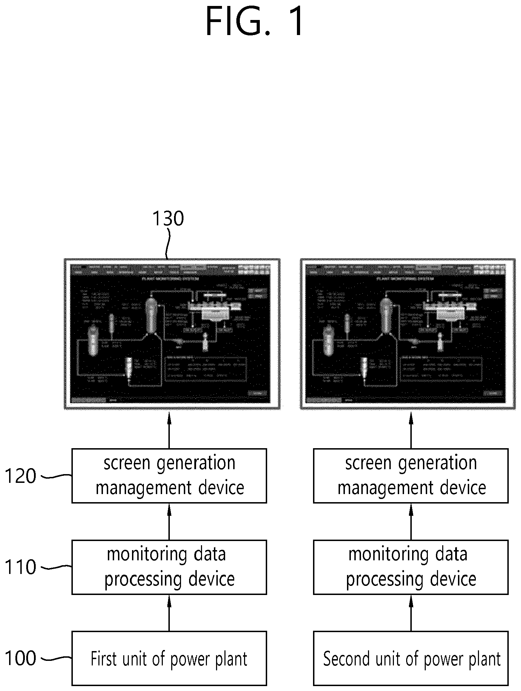

FIG. 1 is a diagram illustrating the conventional nuclear power plant state monitoring screen. Referring to FIG. 1, a monitoring screen is constructed for each unit of the power plant conventionally. In such a screen, only monitoring of a single unit of the power plant is available and a current value of monitoring variable is monitored. In the case that the current value reach a predetermined configuration value, the result of determination of normal/abnormal sate of the corresponding monitoring variable is displayed. In addition, a screen design which is initially designed is fixed in the screen and not changed. Since only a single screen operates, it lacks the ability to monitor or manage various situations.

Korean patent publication number 10-2000-000405 discloses a system for arranging several display screens on one or more computers in order to monitor and control a power plant in a Main Control Room, in that an operator may switch selection efficiently between display properties and between display screens using an input device. However, it fails to provide functions of displaying various screens simultaneously or displaying driving conditions of a plurality of units integrally.

### [Disclosure]

### [Technical Problem]

An object of the present invention is to provide a method for implementing a large integrated monitoring screen for integrated monitoring a plurality of units and a system for the same for displaying various screen displaying driving conditions and machine state of a power plant simultaneously, and manages operation conditions of a plurality of units of a power plant with interlink between screens.

### [Technical Solution]

According to an aspect of the present invention, the present invention provides a method for implementing a large integrated monitoring screen for integrated monitoring a plurality of units. The method for implementing a large integrated monitoring screen includes generating, by a screen generation management device in an integrated monitoring center of a remote location, at least one screen including a state monitoring screen, an early warning screen, a diagnostic analysis screen, and a CCTV screen; and transmitting a screen requested by an operator to the large integrated monitoring screen through an integrated screen adjustment device.

In the step of generating at least one screen, at least one of state monitoring, early warning, diagnostic analysis, and CCTV data processed in at least one of a monitoring data processing device, an early warning processing device, a diagnostic data processing device and a CCTV processing device may be transmitted to the screen generation management device, and displayed on screens embedded in advance.

Monitoring variables displayed on the state monitoring screen, the early warning screen, the diagnostic analysis screen, and the CCTV screen may be interlinked with each other, and identically displayed in real time.

A current value and an early warning index may be displayed simultaneously on each of the state monitoring screen, the early warning screen, the diagnostic analysis screen, and the CCTV screen.

The step of transmitting a screen requested by an operator may include selecting a scenario screen of the situation requested by the operator from scenario screen database for each power plant situation constructed in the integrated screen adjustment device in advance to transmit the selected scenario screen.

The scenario screen for each power plant situation may include a scenario screen for at least one situation including a normal driving condition, an emergency driving condition and an occurrence of early warning.

According to another aspect of the present invention, the present invention provides a large integrated monitoring screen system for integrated monitoring a plurality of units. The large integrated monitoring screen system a screen generation management device for generating at least one screen including a state monitoring screen, an early warning screen, a diagnostic analysis screen, and a CCTV screen of a plurality of units of a nuclear power plant in an integrated monitoring center of a remote location and an integrated screen adjustment device for transmitting a screen requested by an operator to the large integrated monitoring screen.

In the generating at least one screen, at least one of state monitoring, early warning, diagnostic analysis, and CCTV data processed in at least one of a monitoring data processing device, an early warning processing device, a diagnostic data processing device and a CCTV processing device may be transmitted to the screen generation management device, and displayed on screens embedded in advance.

Monitoring variables displayed on the state monitoring screen, the early warning screen, the diagnostic analysis screen, and the CCTV screen may be interlinked with each other, and identically displayed in real time.

A current value and an early warning index may be displayed simultaneously on each of the state monitoring screen, the early warning screen, the diagnostic analysis screen, and the CCTV screen.

The transmitting a screen requested by an operator may include selecting a scenario screen of the situation requested by the operator from scenario screen database for each power plant situation constructed in the integrated screen adjustment device in advance to transmit the selected scenario screen.

The scenario screen for each power plant situation may include a scenario screen for at least one situation including a normal driving condition, an emergency driving condition and an occurrence of early warning.

### [Advantageous Effects]

In order to operate various machines and systems like in nuclear and thermoelectric power plants, a method is important so as to monitor each machine totally and recognize a problem in advance. The method for implementing a large integrated monitoring screen and a system for the same enables to operate multiple functions such as state monitoring of large scale monitoring variables of a plurality of units, early warning, diagnostic analysis, CCTV/screen conference, and the like using centralized large screen.

In addition, the monitoring variable data utilized in the state monitoring, early warning and diagnostic analysis are shared with each other such that the same monitoring variable is reflected on all of three screens in real time, and colors of figures are changed in normal and abnormal states thereby an operator understand situations easily.

Furthermore, various screen arrangements for each power plant situation are designed in advance, and switched to proper screens whenever a situation changes such that integrated monitoring of a plurality of units may be performed efficiently.

### [Description of Drawings]

FIG. 1 is a diagram illustrating the conventional nuclear power plant state monitoring screen.
FIG. 2 is a configuration diagram illustrating an online integrated monitoring system in which a large integrated monitoring screen is included according to example embodiment of the present invention.
FIG. 3a is a diagram illustrating a large integrated monitoring screen system for operating state monitoring, early warning, diagnostic analysis, and CCTV/screen conference of a plurality of units.
FIG. 3b is a diagram illustrating a system configuration format state monitoring screen according to an embodiment of the present invention.
IG. 3c is a diagram illustrating a table format state monitoring screen according to an embodiment of the present invention.
FIG. 3d is a diagram illustrating a diagnostic analysis screen according to an embodiment of the present invention.
FIG. 4a is a diagram illustrating a large integrated monitoring screen in normal state according to an embodiment of the present invention.
FIG. 4b is a diagram illustrating a large integrated monitoring screen when a specific power plant unit is intensively analyzed according to an embodiment of the present invention.
FIG. 4c is a diagram illustrating a large integrated monitoring screen in an emergency state according to an embodiment of the present invention.

### [Mode for Invention]

The present invention may have various modifications and various embodiments and specific embodiments will be illustrated in the drawings and described in detail in the detailed description. However, this does not limit the present invention to specific embodiments, and it should be understood that the present invention covers all the modifications, equivalents and replacements included within the idea and technical scope of the present invention.

Terms including as first, second, and the like are used for describing various constituent elements, but the constituent elements are not limited by the terms. The terms are used only to discriminate one constituent element from another component. For example, a first component may be referred to as a second component, and similarly, the second component may be referred to as the first component without departing from the scope of the present invention. A term 'and/or' includes a combination of a plurality of associated disclosed items or any item of the plurality of associated disclosed items.

When it is described that a component is "connected to" or "accesses" another component, the component may be directly connected to or access the other component or a third component may be present there between. In contrast, it should be understood that, when it is described that an element is "directly connected to" or "directly access" another element, it is understood that no element is present between the element and another element.

Terms used in the present application are used only to describe specific embodiments, and are not intended to limit the present invention. A singular form may include a plural form if there is no clearly opposite meaning in the context. In the present application, it should be understood that term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless it is contrarily defined, all terms used herein including technological or scientific terms have the same meanings as those generally understood by a person with ordinary skill in the art. Terms which are defined in a generally used dictionary should be interpreted to have the same meaning as the meaning in the context of the related art, and are not interpreted as an ideal meaning or excessively formal meanings unless clearly defined in the present application.

Hereinafter, embodiments of the present invention will be described in detail with reference to the accompanying drawings and in describing the preferred embodiments with reference to the accompanying drawings, the same reference numeral will refer to the same or corresponding component regardless of the reference numeral and a duplicated description thereof will be omitted.

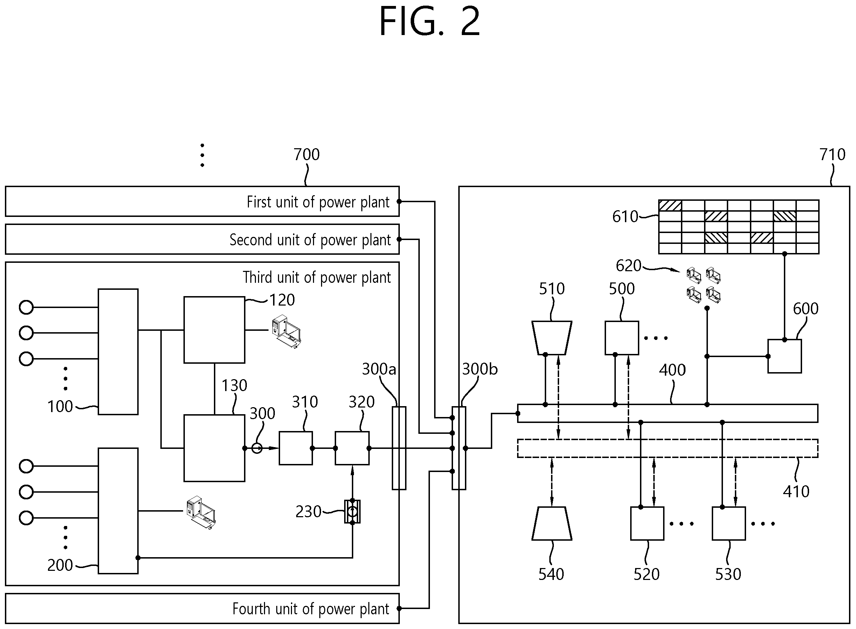

FIG. 2 is a configuration diagram illustrating an online integrated monitoring system in which a large integrated monitoring screen is included according to example embodiment of the present invention. As shown in FIG. 2, in the online integrated monitoring system of example embodiment of the present invention, a system is added to the conventional system, which is designed to transmit monitoring data and diagnostic data to a remote location outside of a power plant and to manage the data transmitted from a plurality of power plants/units integrally.

Referring to FIG. 2, the machine monitoring data collected firstly by the monitoring data acquisition system 100 is transmitted to a local data acquisition device 320 via a monitoring data relay device 310 from the power plant monitoring system 130. At this time, a unidirectional communication cable 300 that enables physical unidirectional communication is installed between the power plant monitoring system 130 and the monitoring data relay device 310. The unidirectional communication cable 300 has a cable output to exterior from the conventional communication cable, but a cable input to the power plant therein is manufactured as an empty space, and accordingly, input communication cannot be performed physically. Accordingly, the unidirectional communication cable 300 may protect the power plant system from exterior invasion.

The machine diagnostic data collected firstly from the diagnostic data acquisition system 200 is transmitted to the local data acquisition device 320 via a diagnostic data relay device 230 from the diagnostic data acquisition system 200. The diagnostic target device to obtain the diagnostic data is mainly targeted to dynamic machines (e.g., rotating machines such as pump, turbine, generator, etc. and valve types such as motor driving valve, air driving valve, etc.) persistently or frequently operating.

The diagnostic data relay device 230 is configured to receive data with a predetermined time interval (e.g., interval of 1 second) from the diagnostic data acquisition system 200 while diagnostic target devices are driving or operating usually. When unusual state, malfunction, problem and the like of a machine occur, it is configured to transmit raw data for a predetermined time interval (i.e., a time interval designated by an operator, commonly 2 to 5 minutes) automatically in a millisecond (msec) unit before and after the corresponding event occurs.

The unidirectional communication cable 300 is also embedded in the diagnostic data relay device 230 for security.

The diagnostic data includes real time measurement data that enable to analyze the physical property mainly. For example, for the pump, the real time measurement data may correspond to a current and a voltage of a motor, vibration/stress of axial direction, vibration/stress of radial direction, bearing vibration, various types of displacements, and the like, and for the valve, the real time measurement data may correspond to a current, a voltage, a displacement, torque stress, thrust stress, air pressure, and the like.

The monitoring data and the diagnostic data collected in the local data acquisition device 320 are transmitted to a center network 400 of an integrated monitoring center 710 via a power plant fire wall 330a and an integrated monitoring center fire wall 330b of a remote location.

The integrated monitoring center 710 is separately constructed by the center network 400 utilized for collecting and transmitting all data in the center and a center backup network 410 for storing data and calling and using the data whenever it is required, and accordingly, stable and efficient network operation may be available.

The monitoring data and the diagnostic data collected from the power plant pass through real time storing, categorizing and processing procedure in a center integrated data processing device 500. And then, the center integrated data processing device 500 transmits real time data and past data (i.e., data which is sorted/stored, not transmitted previously) to a state monitoring integrated server 510, an early warning server 520 and a machine diagnosing server 530 so as to be processed in each server.

An operator computer 620 is a computer used by a center operator, and the operator may check state monitoring data, early warning data and machine diagnosing data through the operator computer 620. In addition, the operator computer 620 may be interlinked with an integrated screen adjustment device 600, and implement the analyzed data in visible shapes and various process screens on a large integrated monitoring screen 610.

All of the data processed in the center integrated data processing device 500, the state monitoring integrated server 510, the early warning server 520 and the machine diagnosing server 530 are stored in a data backup storage server 540 via the center backup network 410. The servers are connected via a network so as to exchange data with each other.

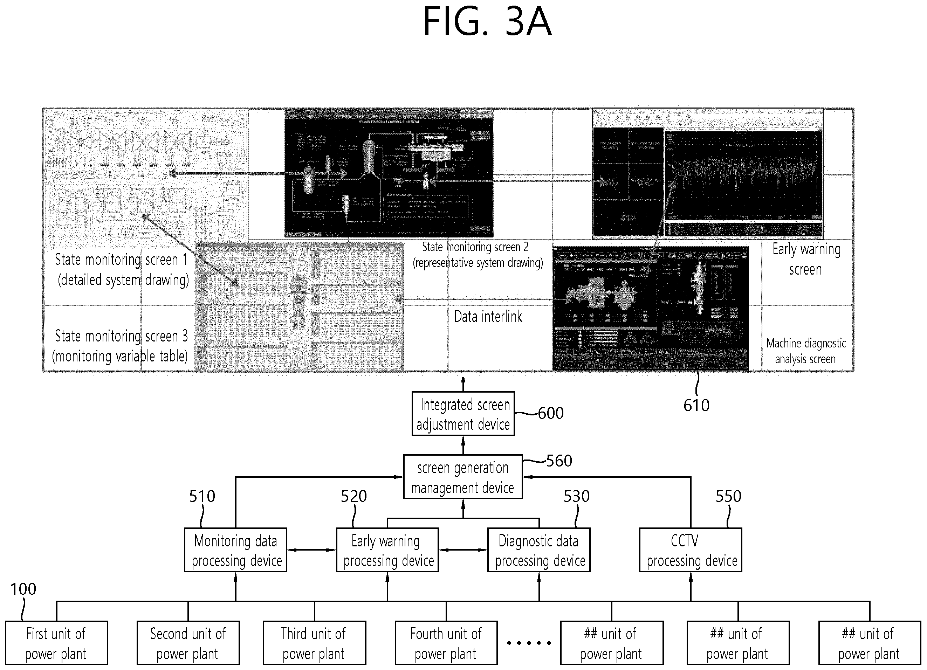

FIG. 3a is a diagram illustrating a large integrated monitoring screen system for operating state monitoring, early warning, diagnostic analysis, and CCTV/screen conference of a plurality of units.

Referring to FIG. 3a, monitoring data, diagnostic data and early warning data transmitted from a plurality of units is processed in a processing device for each data (i.e., state monitoring integrated server (monitoring data processing device) 510) installed in the integrated monitoring center 710, the early warning server (early warning processing device) 520 and the machine diagnosing server (diagnostic data processing device) 530, respectively.

The CCTV/screen conference data of each unit of the power plant is also processed through a CCTV processing device 550.

Then, the processed data (current values of monitoring variables) are transmitted to a screen generation management device 560 and processed so as to be displayed on screens embedded in advance. That is, each of the screens is generated in the screen generation management device 560.

Next, a screen requested by an operator according to an integrated operating condition through the integrated screen adjustment device 600 is transmitted to the large integrated monitoring screen 610. The transmitted screen is displayed on the large integrated monitoring screen 610. The large integrated monitoring screen 610 may be implemented by a screen in which several screens (LEDs) are integrated.

In the integrated screen adjustment device 600, various scenario screens for each power plant situation are constructed in advance and stored as database. That is, screens for efficient integrated monitoring and management are developed in advance according to various power plant situations such as normal driving condition, emergency driving condition, occurrence of early warning, and the like, and stored in the integrated screen adjustment device 600, and the large integrated monitoring screen 610 is switched to the scenario screen of the corresponding situation automatically when an operator selects the corresponding situation.

For example, in normal driving condition of the power plant, a single screen for each of early warning and state monitoring screens is allocated for each power plant, and implemented such that the early warning screen shows an initial screen, the state monitoring screen shows a system configuration format screen and the diagnostic analysis screen shows an initial diagnostic screen of main machines (turbine/generator/pump, etc.). In addition, the CCTV screen shows a screen of a power plant in which maintenance is progressed or a specific interested power plant.

The screens as such may be modified frequently by an operator. Accordingly, when an operator is intended to watch a state of a specific unit intensively, the early warning screen or the state monitoring screen of the specific unit may be displayed throughout several screens (LEDs) of the large integrated monitoring screen. Furthermore, positions displayed on the large integrated monitoring screen may also be modified.

That is, all screens such as the early warning screen, the state monitoring screen, the diagnostic analysis screen, the CCTV screen, and the like may be displayed largely throughout several screens (LEDs) of the large integrated monitoring screen, and the arrangement of the screen may also be modified freely. When an emergency situation occurs in a specific power plant, most of the screen may be used for monitoring the power plant in which the emergency situation occurs.

The early warning screen may display several screens provided by an early warning program such as an initial screen and an analysis screen.

The state monitoring screen may be displayed by the system configuration format screen, a table format screen, and so on, such that an operator may monitor the state of a specific machine related to the emergency situation intensively.

In the machine diagnostic screen, it is shown diagnosis and analysis screens of the machine related to the emergency situation intensively.

The CCTV screen may show a field screen of the power plant machine, and through this, a screen conference may be progressed between a person in charge of the power plant or a chief of the power plant and the integrated monitoring center.

With the operation of the large integrated monitoring screen described above, an emergency situation of a power plant may be identified in real time even in an integrated monitoring center of a remote location. In addition, using the early warning program and the machine diagnostic program installed in the integrated monitoring center, experts may analyze causes promptly, and real time power plant technical support is available even in a remote location, and accordingly, which may takes great role in preventing spread of the emergency situation and early termination of the situation.

The monitoring variables (e.g., temperature, pressure, rate of flow, etc.) displayed in each screen are interlinked with each other. Accordingly, in the case that the same monitoring variable is used for the same unit and the same machine, the variable is interlinked even though types of screen are different, and accordingly, a current value of the corresponding monitoring variable may be identified by watching any screen, and an operator may switch the screen to a screen which is comprehendible freely and monitor.

For example, when watching the early warning screen, it may be easily identified a position of a machine of the early warning monitoring variable through the system configuration format screen of the state monitoring screen. In addition, it may be identified that values of the same machines in other power plant through the table format screen, and an operator of the integrated monitoring center may understand and identify a situation easily.

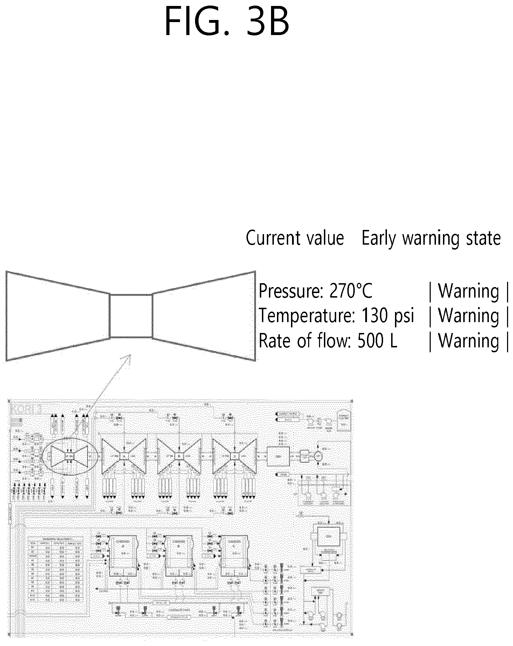

FIG. 3b is a diagram illustrating a system configuration format state monitoring screen according to an embodiment of the present invention. Referring to FIG. 3b, each screen depicts a power plant main system and machines belonged to the system in detail. Current values and early warning state of each machine are displayed in right side simultaneously. In the normal state of the current value and the early warning state of a monitoring variable value of each machine, a figure and a square box of the early warning state are displayed in green (or black) color, for example. In addition, in the abnormal state (i.e., state in which early warning occurs), it is displayed in red color, for example, and an operator may identify normal/abnormal state easily.

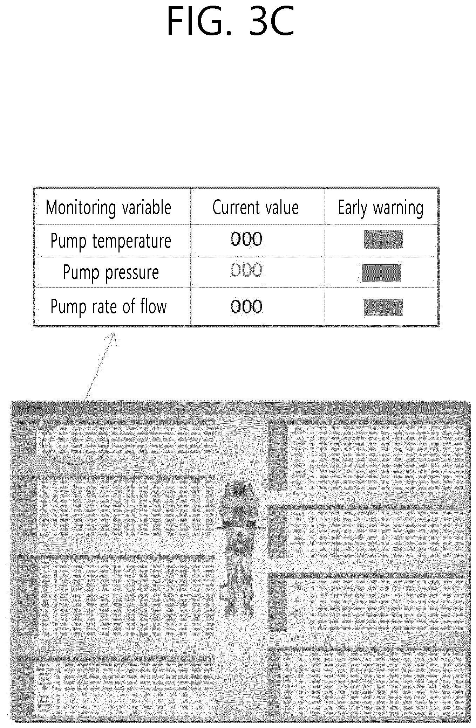

FIG. 3c is a diagram illustrating a table format state monitoring screen according to an embodiment of the present invention. Referring to FIG. 3c, the table format state monitoring screen is mainly used for displaying a lot of monitoring variables for a specific machine, and a current value and an early warning state are displayed simultaneously for each monitoring variable in a table. In the normal state of the current value and the early warning state, a figure and a square box of the early warning state are displayed in green (or black) color, for example. In addition, in the abnormal state (i.e., state in which early warning occurs), it is displayed in red color, for example, and an operator may identify normal/abnormal state easily.

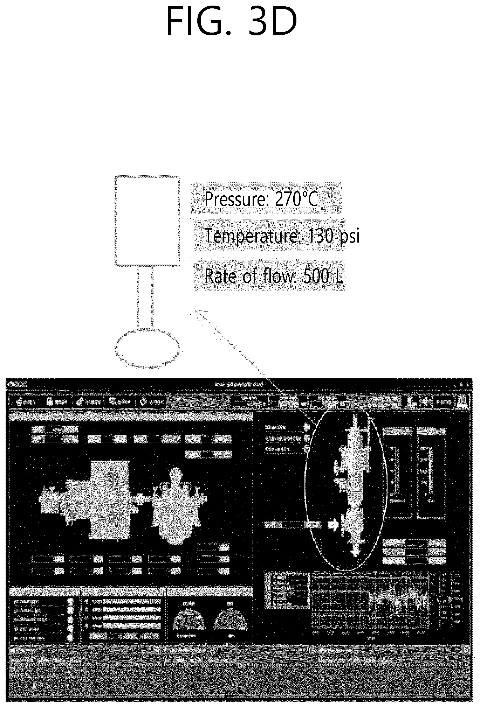

FIG. 3d is a diagram illustrating a diagnostic analysis screen according to an embodiment of the present invention. Referring to FIG. 3d, the diagnostic analysis screen is a screen for diagnostic analysis of a specific machine, and a current value and an early warning state of a monitoring variable are shown in a side of each machine simultaneously. In the normal state of the current value and the early warning state, a figure and a square box of the early warning state are displayed in green (or black) color, for example. In addition, in the abnormal state (i.e., state in which early warning occurs), it is displayed in red color, for example, and an operator may identify normal/abnormal state easily.

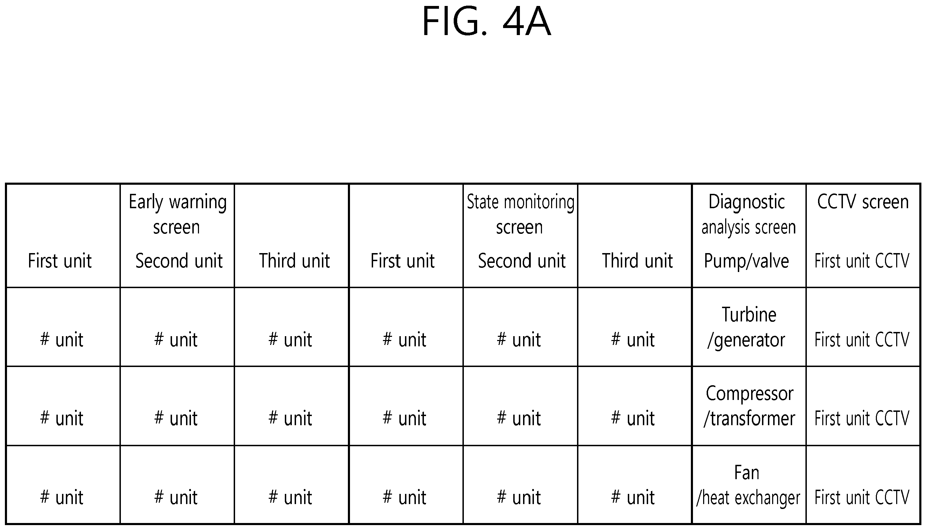

FIG. 4a is a diagram illustrating a large integrated monitoring screen in normal state according to an embodiment of the present invention. Referring to FIG. 4a, a screen is divided into a predetermined area, and displays the early warning screen, the state monitoring screen, the diagnostic analysis screen and the CCTV screen integrally. In addition, according to a convenience of an operator, a screen area may be freely adjusted and displayed power plant unit may be changed, and accordingly, an operator may watch a desired power plant in any time.

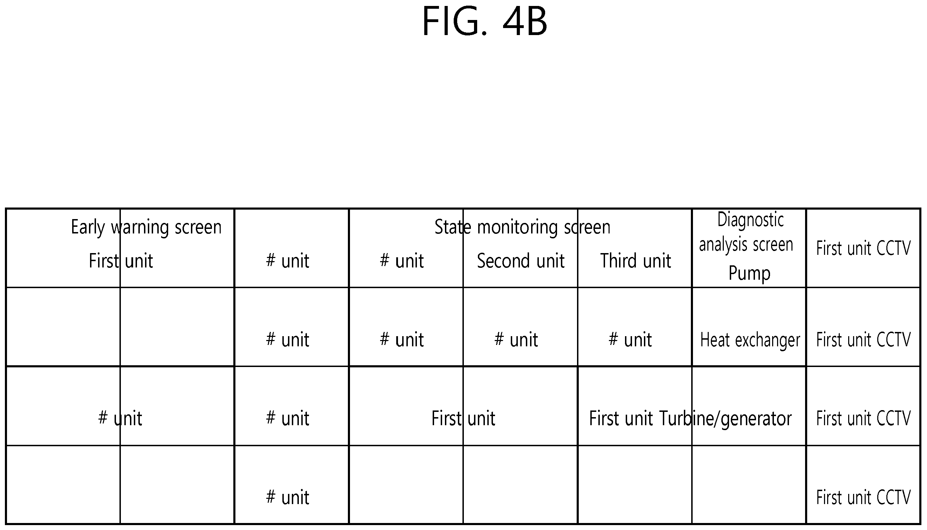

FIG. 4b is a diagram illustrating a large integrated monitoring screen when a specific power plant unit is intensively analyzed according to an embodiment of the present invention. That is, FIG. 4b shows an example of a screen which is applied in the case that a specific unit (i.e., first unit in FIG. 3b) in a normal driving situation is intended to be intensively monitored and analyzed. As such, even in the case of the normal driving, scenario screens for each of various situations may be developed, constructed as database and used.

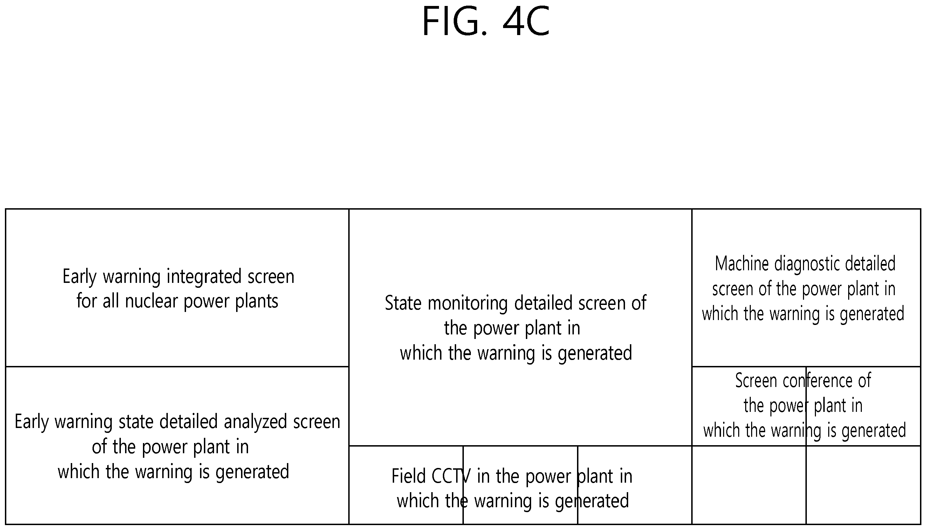

FIG. 4c is a diagram illustrating a large integrated monitoring screen in an emergency state according to an embodiment of the present invention. Referring to FIG. 4c, in an emergency state, a screen is configured with a power plant which is emergency driving mainly among a plurality of units, and the screen includes an early warning state detailed analyzed screen of the power plant in which the emergency situation occurs, a state monitoring detailed screen, a machine diagnostic detailed screen, and so on. Accordingly, the situation of the power plant in which the emergency situation occurs may be apprehended in detail. In addition, an actual situation may be apprehended through a field CCTV in the power plant in which the warning is generated, and a countermeasure may be discussed through a screen conference between headquarter and the power plant in which the warning is generated. However, even in the emergency state, early warning integrated screen for all nuclear power plants is displayed together, and a problem of other power plant unit may not be disregarded.

As described above, the large integrated monitoring screen may be displayed by integrating early warning, state monitoring, diagnostic analysis, CCTV/screen conference, and the like, a screen size or a place displayed on a screen is not fixed, and may be freely configured according to user convenience. That is, according to a power plant driving situation, scenario screen configuration for various power plant situations is constructed as database, and it may be operated by changing screens according to a situation.

So far, various embodiments of the present invention are described. However, it is understood that the description is just for illustration and not to limit the scope of the present invention defined by the scope of the following claims. Accordingly, other embodiments are also within the scope of the following claims. For example, various modifications may be performed without departing from the scope of the present invention. Additionally, a part of the steps described above are independent from the order, and may be performed in different order from those of described above.

### [Description of reference numerals]

100: monitoring data acquisition system 110: monitoring data network
20: Main Control Room 130: power plant monitoring system
140: operator computer (Client PC) 150: power plant measuring instrument
200: diagnostic data acquisition system 230: diagnostic data relay device
300: unidirectional communication cable (external type)
   310: monitoring data relay device
320: local data acquisition device 330a, 330b: fire wall
400: center network 410: center backup network
500: center integrated data processing device
510: state monitoring integrated server (monitoring data processing device)
520: early warning server (early warning processing device)
530: machine diagnosing server (diagnostic data processing device)
540: data backup storage server 600: integrated screen adjustment device
610: large integrated monitoring screen 620: operator computer
700: nuclear power plant 710: integrated monitoring center
550: CCTV processing device 560: screen generation management device

## Claims

1. A method for implementing a large integrated monitoring screen for integrated monitoring of a plurality of units, comprising:
generating, by a screen generation management device in an integrated monitoring center of a remote location, at least one screen including a state monitoring screen, an early warning screen, a diagnostic analysis screen, and a CCTV screen; and
transmitting a screen requested by an operator to the large integrated monitoring screen through an integrated screen adjustment device.

2. The method for implementing a large integrated monitoring screen of claim 1, wherein in the step of generating at least one screen, at least one of state monitoring, early warning, diagnostic analysis, and CCTV data processed in at least one of a monitoring data processing device, an early warning processing device, a diagnostic data processing device and a CCTV processing device is transmitted to the screen generation management device, and displayed on screens embedded in advance.

3. The method for implementing a large integrated monitoring screen of claim 2, wherein monitoring variables displayed on the state monitoring screen, the early warning screen, the diagnostic analysis screen, and the CCTV screen are interlinked with each other, and identically displayed in real time.

4. The method for implementing a large integrated monitoring screen of claim 3, wherein a current value and an early warning index are displayed simultaneously on each of the state monitoring screen, the early warning screen, the diagnostic analysis screen, and the CCTV screen.

5. The method for implementing a large integrated monitoring screen of claim 1, wherein the step of transmitting a screen requested by an operator includes selecting a scenario screen of the situation requested by the operator from scenario screen database for each power plant situation constructed in the integrated screen adjustment device in advance to transmit the selected scenario screen.

6. The method for implementing a large integrated monitoring screen of claim 5, wherein the scenario screen for each power plant situation includes a scenario screen for at least one situation including a normal driving condition, an emergency driving condition and an occurrence of early warning.

7. A large integrated monitoring screen system for integrated monitoring of a plurality of units, comprising:
a screen generation management device for generating at least one screen including a state monitoring screen, an early warning screen, a diagnostic analysis screen, and a CCTV screen of a plurality of units of a nuclear power plant in an integrated monitoring center of a remote location; and
an integrated screen adjustment device for transmitting a screen requested by an operator to the large integrated monitoring screen.

8. The large integrated monitoring screen system of claim 7, wherein in the generating at least one screen, at least one of state monitoring, early warning, diagnostic analysis, and CCTV data processed in at least one of a monitoring data processing device, an early warning processing device, a diagnostic data processing device and a CCTV processing device is transmitted to the screen generation management device, and displayed on screens embedded in advance.

9. The method for large integrated monitoring screen system of claim 8, wherein monitoring variables displayed on the state monitoring screen, the early warning screen, the diagnostic analysis screen, and the CCTV screen are interlinked with each other, and identically displayed in real time.

10. The large integrated monitoring screen system of claim 9, wherein a current value and an early warning index are displayed simultaneously on each of the state monitoring screen, the early warning screen, the diagnostic analysis screen, and the CCTV screen.

11. The large integrated monitoring screen system of claim 7, wherein transmitting a screen requested by an operator includes selecting a scenario screen of the situation requested by the operator from scenario screen database for each power plant situation constructed in the integrated screen adjustment device in advance to transmit the selected scenario screen.

12. The large integrated monitoring screen system of claim 11, wherein the scenario screen for each power plant situation includes a scenario screen for at least one situation including a normal driving condition, an emergency driving condition and an occurrence of early warning.
